# EUROPÄISCHE PATENTSCHRIFT

(11) **EP 2 151 597 B1**
(45) Veröffentlichungstag und Bekanntmachung des Hinweises auf die Patenterteilung: **05.03.2014**
(21) Anmeldenummer: 09010208.8
(22) Anmeldetag: 07.08.2009
(51) Int. Cl.: F16D 65/56

(54) **Pneumatisch oder elektromechanisch betätigbare Scheibenbremse**
Pneumatically or electromagnetically actuated disc brake
Frein à disques pouvant être actionné de manière pneumatique ou électropneumatique

(30) Priorität: 07.08.2008 DE 102008036765
(43) Veröffentlichungstag der Anmeldung: 10.02.2010
(73) Patentinhaber: KNORR-BREMSE Systeme für Nutzfahrzeuge GmbH, 80809 München (DE)
(72) Erfinder: Kempinger, Georg, 85386 Eching (DE); Camilo-Martinez, José, 82008 Unterhaching (DE); Iraschko, Johann, 85301 Schweitenkirchen (DE); Orgler, Florian, 80336 München (DE)
(74) Vertreter: Mattusch, Gundula

(56) Entgegenhaltungen:
- EP-A- 1 319 858
- DE-A1- 4 034 165
- DE-A1-102004 019 723
- US-B1- 6 311 809

## Beschreibung

Die Erfindung betrifft eine pneumatisch oder elektromechanisch betätigbare Scheibenbremse nach dem Oberbegriff des Anspruchs 1.

Derartige Scheibenbremsen benötigen zur Erzeugung der geforderten Zuspannkraft eine mechanische Übersetzung, da die Kraft der insbesondere pneumatisch beaufschlagten Bremszylinder aufgrund des Druckniveaus (derzeit ca. 10 bar) und der limitierten Baugröße der Bremszylinder beschränkt ist.

Bei den derzeit bekannten pneumatisch betätigten Scheibenbremsen finden sich Übersetzungsverhältnisse zwischen 10 : 1 und 20 : 1. Die Kolbenhübe der Bremszylinder bewegen sich zwischen 50 und 75 mm, wodurch sich Zuspannwege zum Andrücken der Bremsbeläge an die Bremsscheibe von etwa 4 mm ergeben.

Die Reibmaterialdicke der Bremsbeläge beträgt etwa 20 mm. Da zwei Beläge eingebaut sind, ergibt sich somit, ohne Berücksichtigung des Bremsscheibenverschleißes, ein Verschleißweg von etwa 40 mm. Dieser Weg ist um ein Vielfaches größer als der o.g. Zuspannweg. Es besteht daher die Notwendigkeit, die Bremse mittels einer Vorrichtung dem Belagverschleiß entsprechend nachzustellen.

Stand der Technik ist eine automatisch arbeitende Verschleißnachstellung, mit der erreicht wird, dass das sogenannte Lüftspiel, womit der Spalt zwischen den Bremsbelägen und der Bremsscheibe im unbetätigten Zustand gemeint ist, unabhängig vom Verschleißzustand und Verschleißverhalten der Bremsbeläge konstant gehalten wird.

Aus der DE 94 22 342 U1 ebenso wie aus der DE 10 2004 037 771 A1 sind eine Nachstelleinrichtung für eine pneumatisch betätigbare Scheibenbremse, insbesondere in Schiebesattelausführung bekannt, die allerdings auch in pneumatisch betätigbaren Fest- oder Schwenksattelscheibenbremsen verwendbar ist.

Bei den bekannten Scheibenbremsen sind in den als Gewinderohre ausgebildeten Stellspindeln konzentrisch Nachsteller angeordnet, von denen einer über ein Antriebselement, z.B. einen Schaltfinger oder ein Zahnrad, von einem Bremshebel angetrieben wird.

Bei einem Bremsvorgang führt der mit einer Kolbenstange des Bremszylinders gekoppelte Bremshebel eine Schwenkbewegung aus.

Bevor über den Koppelmechanismus der Nachstellung (z.B. Schaltgabel und Schaltfinger oder Zahnrad) die Schwenkbewegung des Bremshebels in den Nachsteller eingeleitet wird, muss ein sogenannter Leerweg überwunden werden. Dieser Weg ist für die Größe des genannten Lüftspiels ausschlaggebend, da während dieser Bewegung die Nachstellung nicht aktiv ist und der Zuspannweg damit das Lüftspiel darstellt. Nach Überwindung des Leerwegs wird der Nachsteller in eine Drehbewegung versetzt und durch die Koppelung mit dem Gewinderohr ein Nachstellvorgang eingeleitet.

Wie erwähnt, sind die bekannten Nachstelleinrichtungen im Innern der Stellspindeln platziert, wobei üblicherweise lediglich eine Nachstelleinrichtung über den Bremshebel betätigbar ist, während zur synchronen Verstellung der anderen Stellspindel Transmissionsmittel vorgesehen sind, mit denen eine gleiche Verstellung beider Stellspindeln gewährleistet ist.

Allerdings bedingt der Einbau der bekannten Nachstelleinrichtung einen erheblichen Bauraum, nicht zuletzt durch die Einrichtung zur synchronen Verstellung der Stellspindeln.

Forderungen gehen dahin, den Bremssattel, der die Nachstelleinrichtung ebenso beherbergt wie die Stellspindeln, kleiner zu dimensionieren, um so den Einbauraum für die Scheibenbremse insgesamt zu optimieren, aber auch, entsprechend einer ständigen Vorgabe, um Gewicht zu sparen.

Aus der US 6 311 809 B 1 ist eine gattungsgemäße Scheibenbremse offenbart, deren Nachstelleinrichtung zwischen den Stellspindeln angeordnet ist. Mittels einer Lastschaltkupplung soll eine Überlastung des Systems bei Überschreiten einer vorbestimmten Last durch Unterbrechung der Nachstellung verhindert werden, wobei als Lastschaltkupplung eine Schlingfeder vorgesehen ist, die bis in den Bremshebel ragt, namentlich in eine Exzenterwelle.

Der Erfindung liegt die Aufgabe zugrunde, eine Scheibenbremse der gattungsgemäßen Art so weiterzuentwickeln, dass sie bei Beibehaltung bewährter Konstruktions- bzw. Funktionsprinzipien der Nachstelleinrichtung kleiner dimensioniert werden kann.

Diese Aufgabe wird durch eine Scheibenbremse mit den Merkmalen des Anspruchs 1 gelöst.

Durch die Ausbildung der Nachstelleinrichtung zwischen den Stellspindeln ergeben sich eine ganze Reihe von Vorteilen. So ist zunächst einmal hervorzuheben, dass durch die installierte Nachstelleinrichtung eine durchaus bemerkenswerte Kostenersparnis gegeben ist, wobei die Nachstelleinrichtung in ihrem Grundaufbau aus folgenden Funktionsteilen besteht:
- einer Drehachse
- einer Antriebshülse
- einem Rückdrehelement mit Überlastschutz
- einem Axiallager
- einem Antriebselement
- einer Kugelkonuskupplung
- einer Kugelrampenkupplung
- einem Drucklager
- einer Lagerscheibe
- einer Einstellscheibe
- einer Vorspannfeder
- einem Federteller.

Die Bauraum beanspruchenden Funktionsteile, also die Kugelkonuskupplung, die Kugelrampenkupplung, die Abtriebsscheibe sowie die Vorspannfeder sind im Bremssattel außerhalb des Überdeckungsbereiches des Bremshebels angeordnet, während die sozusagen schlankeren Bauteile, wie die Drehachse und die darauf geführte Antriebshülse durch den Bremssattel geführt sind, der zu diesem Zweck bevorzugt eine Ausnehmung aufweist.

Neben der genannten Minimierung der Fertigungskosten führt die Erfindung zu einer Gewichtsreduzierung der Scheibenbremse insgesamt sowie zu einer Bauraumverkleinerung. Beides entspricht den an eine Optimierung der Scheibenbremse gestellten Forderungen, wobei vor allem die Gewichtsreduzierung zu einer Verringerung des Kraftstoffverbrauchs des Fahrzeuges führt.

Die Übertragung der Schwenkbewegung des Bremshebels bei Betätigung der Bremse auf die Nachstelleinrichtung erfolgt über einen Kegelradantrieb, wobei ein Kegelrad fest mit der Antriebshülse verbunden ist, über eine Schaltgabel oder einen anderen geeigneten Antrieb.

Das zentrale Antriebselement der Nachstelleinrichtung kann als Zahnrad ausgebildet sein, das mit entsprechenden Zahnrädern der Stellspindeln korrespondiert. Diese Getriebeteile sind als einfache Blechformteile herzustellen.

Da die drehbeweglichen Funktionsteile allesamt kugelgelagert sind, ergibt sich eine hohe Verschleißfestigkeit und in der Folge eine entsprechende Dauerfunktionssicherheit ebenso wie ein äußerst exaktes Funktionsverhalten.

Die Lastschaltkupplung, bestehend aus der Kugelkonuskupplung und der damit eine Baueinheit bildenden Kugelrampenkupplung ist genau einstellbar, da die Schaltkraft ausschließlich über die geometrische Formgebung der Rampen sowie durch die einstellbare Vorspannfeder definiert wird.

Ein manuelles Zurückstellen der Nachstelleinrichtung ist mit einem nur geringen Kraftaufwand möglich, da die genannte Lastschaltkupplung nicht überwunden werden muss.

Eine einfache Montage ergibt sich daraus, dass keine bestimmte Positionierung der Nachstelleinrichtung zum Bremshebel erforderlich ist.

Durch die oszillierende, dem Hub eines angeschlossenen Bremszylinders, mit dem der Bremshebel betätigbar ist, analoge Drehbewegung der Drehachse der Nachstelleinrichtung, können der Bremszylinderhub und das vorhandene Lüftspiel gemessen und überwacht werden. Dies führt in der Konsequenz zu einer Erhöhung der Verkehrssicherheit.

Weitere vorteilhafte Ausbildungen der Erfindung sind in den Unteransprüchen gekennzeichnet.

Die Funktionsweise der Nachstelleinrichtung wird nachfolgend anhand der beigefügten, ein Ausführungsbeispiel der Erfindung darstellenden Zeichnungen beschrieben.

Es zeigen:
- Figur 1: eine Teilansicht einer erfindungsgemäßen Scheibenbremse in einer geschnittenen schematischen Draufsicht
- Figur 2: eine Nachstelleinrichtung der Scheibenbremse als Einzelheit in einer Seitenansicht

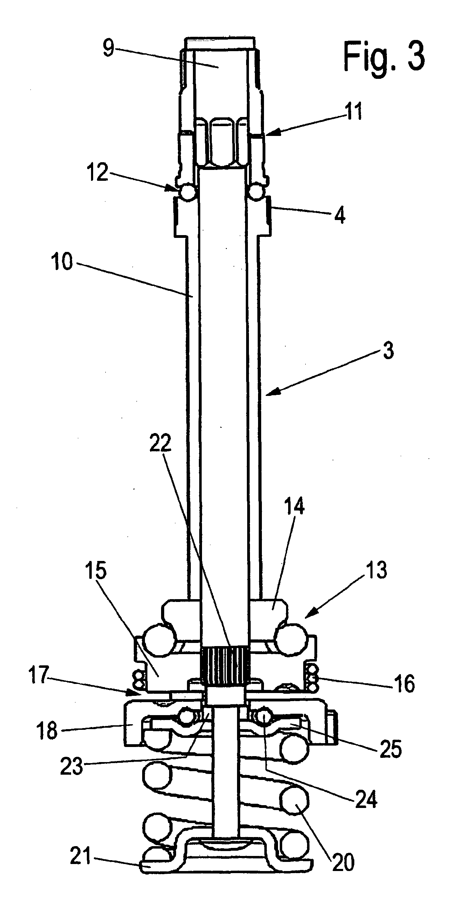

- Figur 3: die Nachstelleinrichtung nach Figur 2 in einem Längsschnitt
- Figur 4: einen Ausschnitt der Nachstelleinrichtung in einer vergrößerten Ansicht

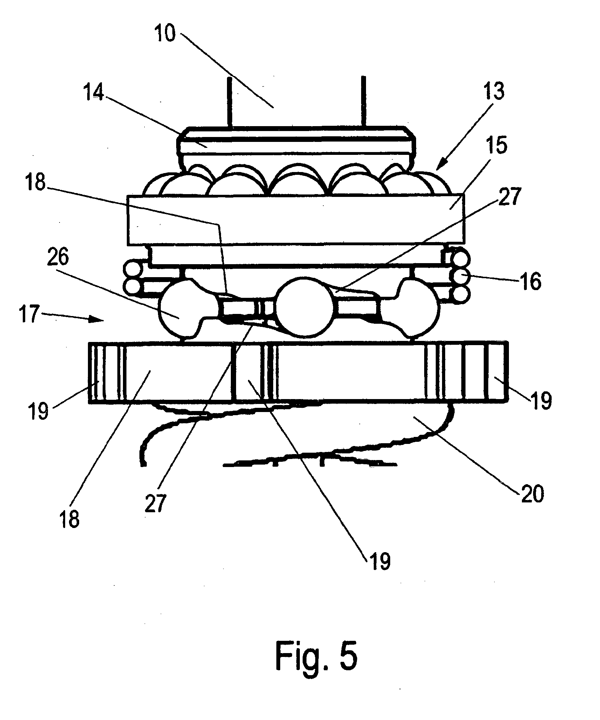

- Figur 5: eine Einzelheit der Nachstelleinrichtung in einer vergrößerten Seitenansicht
- Figur 6: einen Querschnitt durch die Nachstelleinrichtung gemäß der Linie VI-VI in Figur 4.

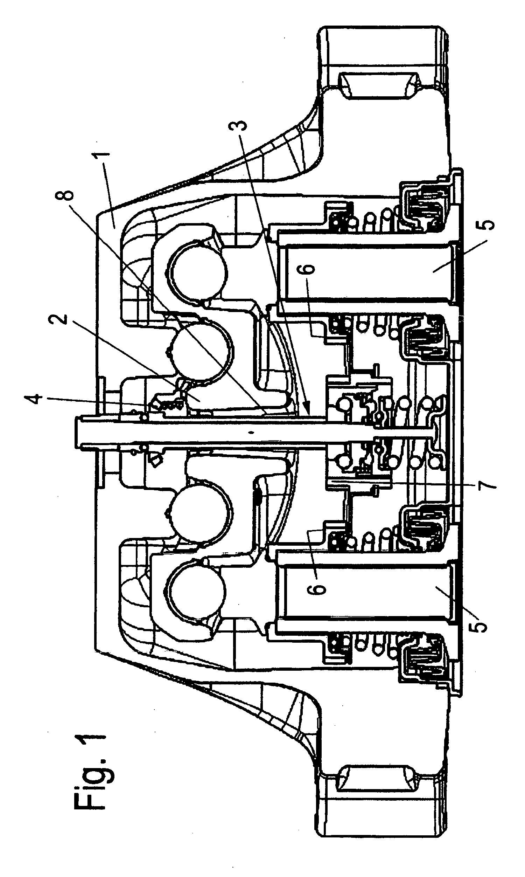

In der Figur 1 ist ein Teil einer pneumatisch oder elektromechanisch betätigbaren Scheibenbremse, insbesondere für ein Nutzfahrzeug dargestellt, mit einem Bremssattel 1, einer darin angeordneten, einen Bremshebel 2 aufweisenden Zuspanneinrichtung zum Andrücken von nicht dargestellten Bremsbelägen an eine Bremsscheibe, wobei zwei parallel und abständig zueinander angeordnete Stellspindeln 5 mittels des Bremshebels 2 unter axialer Verstellung gegen den zugeordneten Bremsbelag drückbar sind.

Im Bremssattel ist eine durch den Bremshebel 2 betätigbare Nachstelleinrichtung 3 angeordnet, mit der über eine axiale Verstellung der Stellspindeln 5 eine verschleißbedingte Änderung eines Lüftspiels zwischen dem Bremsbelag und der Bremsscheibe im Wesentlichen ausgleichbar ist.

Die Nachstelleinrichtung 3 ist zwischen den Stellspindeln 5 angeordnet und steht mit diesen über ein Getriebe in Wirkverbindung.

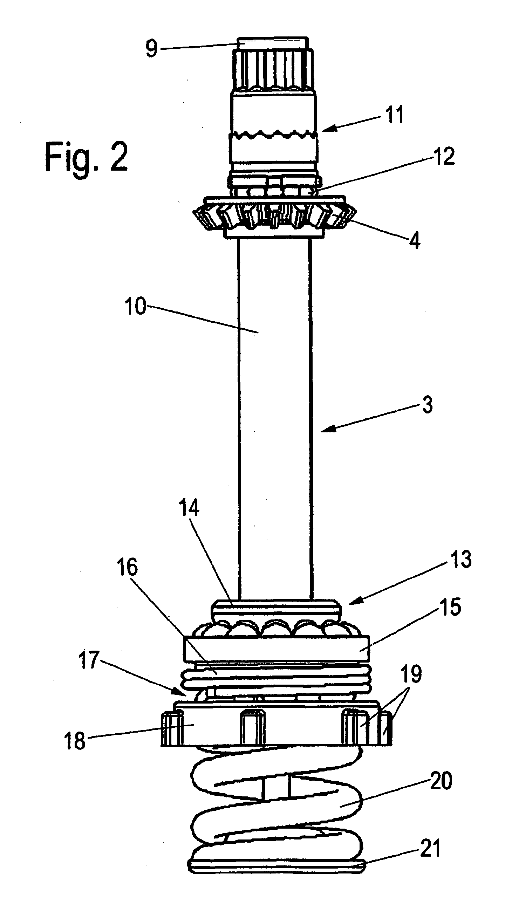

Dieses Getriebe besteht aus einem zentralen Antriebselement 7 in Form eines Zahnrades, das verdrehsicher mit einer Antriebshülse 10 (Figur 2) verbunden ist und das mit zwei ebenfalls als Zahnräder ausgebildeten Getrieberädern 6 korrespondiert, die jeweils an den Stellspindeln 5 befestigt sind.

Bei einer Betätigung der Bremse führt der Bremshebel 2 eine Schwenkbewegung aus, die über ein Antriebsrad 4 in die Nachstelleinrichtung 3 geleitet und auf die Antriebshülse 10 übertragen wird.

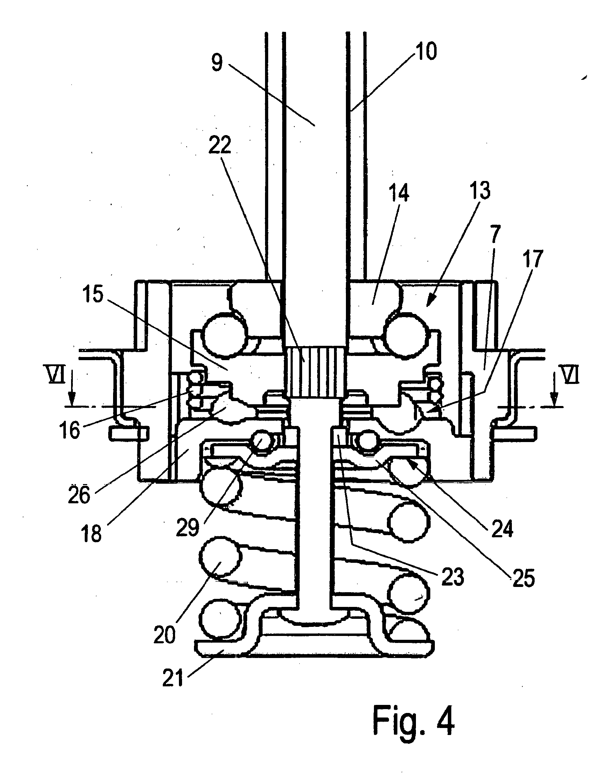

Mit dieser Antriebshülse 10 ist eine Kegelbuchse 14 einer Kugelkonuskupplung 13 (Figur 4) verbunden, während ein Kupplungsring 15 der Kugelkonuskupplung 13 reibschlüssig mit einer Kugelrampenkupplung 17 in Kontakt steht.

Durch diesen Reibschluss zwischen der Kugelkonuskupplung 13 und der Kugelrampenkupplung 17 wird die Drehbewegung der Antriebshülse 10 auf ein Antriebsrad 18 übertragen, das in Korrespondenz steht mit dem Antriebselement 7.

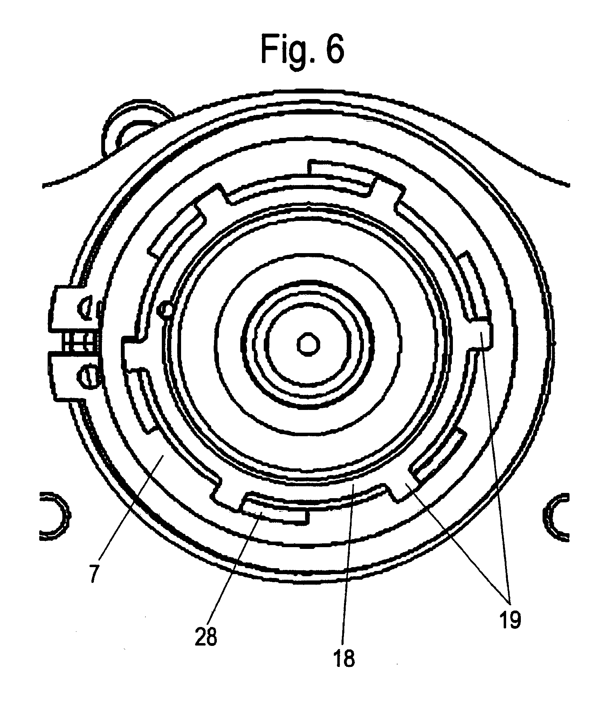

Während einer sogenannten Lüftspielphase, bei der die Bremsbeläge noch nicht in Kontakt zur Bremsscheibe stehen, erfolgt zunächst keine Einleitung der Drehbewegung in die Stellspindeln 5, da die Nachstelleinrichtung 3 zunächst einen Todweg zurücklegen muss. Dieser definiert sich aus einem freien Drehwinkel zwischen der Abtriebsscheibe 18 und dem Antriebselement 7 (Figur 6).

Nach Überwindung des Todwegs erfolgt eine Krafteinleitung in das Antriebselement 7. Falls das Lüftspiel zu groß ist, werden nun die beiden Stellspindeln solange verdreht, bis es zum Kontakt der Bremsbeläge zur Bremsscheibe kommt. Durch den sehr raschen Kraftaufbau innerhalb der gesamten Zuspannmechanik, ist es nun nicht mehr möglich, die Stellspindeln 5 zu verdrehen.

Da jedoch aufgrund von Verformungen der Bremshebel 2 bis zum Erreichen eines Kräftegleichgewichts weiterhin eine Schwenkbewegung durchführt, ist es notwendig, dass die Nachstelleinrichtung 3 über eine Lastschaltkupplung verfügt, die durch die erwähnte Kugelkonuskupplung 13 und Kugelrampenkupplung 17 gebildet wird.

Bei Erreichen eines definierten Drehmoments, beispielsweise 8 Nm, rollen Kugeln 26 der Kugelrampenkupplung 17 zugeordneten Rampen 27 am Kupplungsring 15 und an der Abtriebsscheibe 18 hoch, wobei diese nach unten, gegen die Kraft einer Vorspannfeder 20 gedrückt wird, die sich mit ihrem anderen Ende an einem Federteller 21 abstützt, der an der Drehachse 9 befestigt ist.

Da sich in der Verformungsphase der Kupplungsring 15 relativ zur Drehachse 9 und der damit verbundenen Vorspannfeder 20 dreht, wird die Kraft in die Vorspannfeder 20 über ein Drucklager 24 eingeleitet, mit einer Lagerscheibe 25, an der die Vorspannfeder 20 anliegt, und Kugeln 29, die zwischen der Lagerscheibe 25 und der Abtriebsscheibe 18 angeordnet sind.

Beim Lösen der Bremse rollen zunächst die Kugeln 26 der Kugelrampenkupplung 17 bis zum Erreichen einer Ausgangsstellung die Rampen 27 hinunter. In dieser Ausgangsstellung stützt sich die Vorspannfeder 20 nicht mehr über die Kugelrampenkupplung 17 ab, sondern über eine Einstellscheibe 23, die zwischen der Lagerscheibe 25 und einem Ansatz der Drehachse 9 positioniert ist. Dadurch sind die Kugelrampenkupplung 17 und die Kugelkonuskupplung 13 weitgehend entlastet. Eine geringe Vorspannung erfolgt lediglich durch eine Drehfeder 16, die die Kugelrampenkupplung 17 durch Verdrehen für ein schnelles Ansprechverhalten vorspannt.

Im weiteren Verlauf wird die gesamte Nachstelleinrichtung 3 innerhalb des Eingriffsspiels zwischen der Abtriebsscheibe 18 und dem Antriebselement 7 durch den Bremshebel 2 zurückgedreht, wobei hierzu über den Umfang der Abtriebsscheibe 18 verteilte Zähne 19 in zugeordnete Lücken 28 des Antriebselementes 7 eingreifen. Die Differenz zwischen der Breite des Zahnes 19 und der Länge der zugeordneten Lücke 28, gesehen in Drehrichtung, bestimmt den freien Drehwinkel. Falls keine Nachstellung erfolgt, erreicht der Bremshebel 2 zeitgleich mit der vollständigen Zurückdrehung des Eingriffsspiels die Ausgangsposition.

Bei einer zuvor erfolgten Nachstellung, wird nach Zurücklegung des Eingriffsspiels durch eine Freilauffunktion der Kugelrampenkupplung 17 und der Kugelkonuskupplung 13 nur der Kupplungsring 15 zusammen mit der Kegelbuchse 14, der Antriebshülse 10 und dem Antriebselement 7 vom Bremshebel 2 zurückgedreht. Dadurch ist gewährleistet, dass die bei der Betätigung verstellten Stellspindeln 5 nicht mehr zurückgeführt werden und eine verschleißabhängige Nachstellung vorliegt.

Zum Erneuern verschleißbedingter Bremsbeläge muss die Nachstelleinrichtung 3 manuell zurückgestellt werden, was durch Drehen an einem sich über ein Axiallager 12 an der Antriebshülse 10 abstützendes Rückdrehelement 11 mit entgegen der Sperrwirkung des Freilaufs erfolgt. Hierzu ist es daher erforderlich, die Sperrwirkung des Freilaufs aufzuheben.

Dazu ist eine in axialer Richtung wirkende Richtungskupplung vorgesehen, deren Bestandteil der Kupplungsring 15 ist, der mittels einer Keilverzahnung 22 drehfest mit der Drehachse 9 gekoppelt ist. Dies führt dazu, dass die Drehbewegung und das Drehmoment beim manuellen Zurückdrehen nicht über die Kugelrampenkupplung 17 geleitet werden, die somit nicht betätigt wird, ebenso wie die Kugelkonuskupplung 13. Die Klemmwirkung des Freilaufmechanismus ist somit aufgehoben.

Die Kopplung der Drehachse 9 mit dem Kupplungsring 15 bewirkt, dass bei jeder Bremsbetätigung die Drehachse 9 entsprechende dem Schwenkwinkel des Bremshebels 2 verdreht wird.

Damit ergibt sich die Möglichkeit, durch eine Messung des Drehwinkels z.B. den Hub des Bremszylinders zu messen. Zusätzlich kann in Kombination mit dem aufgebrachten Bremsdruck auf die Größe des Lüftspiels geschlossen werden.

Durch diese Zusatzfunktion ist es möglich, die Funktion der automatischen Verschleißnachstellung zu überwachen, womit eine deutliche Erhöhung der Verkehrssicherheit erzielt wird.

Bei einer Ermittlung des Drehwinkels an der Drehachse 9 kann überdies der Verschleißzustand der Bremsbeläge erfasst werden, da die Drehachse 9 neben einer oszillierenden, dem Bremshebel analogen Bewegung, auch eine dem Nachstellwinkel entsprechende Drehbewegung ausführt.

Da der Kupplungsring 15 über die Kugelrampenkupplung 17 mit der Abtriebsscheibe 18 verbunden ist und die Abtriebsscheibe 18 dem Belagverschleiß entsprechend verdreht wird, kann somit auch der Verschleiß des Bremsbelages ermittelt werden.

### Bezugszeichenliste

- 1: Bremssattel
- 2: Bremshebel
- 3: Nachstelleinrichtung
- 4: Antriebsrad
- 5: Stellspindel
- 6: Getrieberad
- 7: Antriebselement
- 8: Ausnehmung
- 9: Drehachse
- 10: Antriebshülse
- 11: Rückdrehelement
- 12: Axiallager
- 13: Kugelkonuskupplung
- 14: Kegelbuchse
- 15: Kupplungsring
- 16: Drehfeder
- 17: Kugelrampenkupplung
- 18: Abtriebsscheibe
- 19: Zahn
- 20: Vorspannfeder
- 21: Federteller
- 22: Keilverzahnung
- 23: Einstellscheibe
- 24: Drucklager
- 25: Lagerscheibe
- 26: Kugel
- 27: Rampe
- 28: Lücke
- 29: Kugel

## Patentansprüche

1. Pneumatisch oder elektromechanisch betätigbare Scheibenbremse, insbesondere für ein Nutzfahrzeug, mit
a) einem eine Bremsscheibe übergreifenden Bremssattel (1),
b) einer im Bremssattel (1) angeordneten, einen Bremshebel (2) aufweisenden Zuspanneinrichtung zum Andrücken von Bremsbelägen an die Bremsscheibe,
c) zwei parallel und abständig zueinander angeordneten Stellspindeln (5), die mittels der Zuspanneinrichtung axial bewegbar sind,
d) einer im Bremssattel positionierten, durch den Bremshebel (2) betätigbaren Nachstelleinrichtung (3), mit der über eine axiale Verstellung der Stellspindeln (5) eine verschleißbedingte Änderung eines Lüftspiels zwischen dem Bremsbelag und der Bremsscheibe im Wesentlichen ausgleichbar ist,
e) einem ein zentrales Antriebselement (7) aufweisende Nachstelleinrichtung (3), die zwischen den Stellspindeln (5) angeordnet ist und mit diesen über ein Getriebe in Wirkverbindung steht, wobei das zentrale Antriebselement (7) mit jeweils an einer Stellspindel (5) befestigten Getrieberädern (6) zur synchronen Verstellung in Wirkverbindung steht,
**dadurch gekennzeichnet, dass** das Antriebselement (7) eine aus einer Kugelkonuskupplung (13) und einer damit eine Baueinheit bildenden, mittels einer einstellbaren Vorspannfeder (20) federbelasteten Kugelrampenkupplung (17) bestehende Lastschaltkupplung aufweist, wobei die Kugelkonuskupplung (13) eine auf einer Drehachse (9) geführte Kegelbuchse (14) mit an ihrer Konusseitige kalottenförmigen Ausnehmungen, in denen Kugeln einliegen, die sich andererseits an einem mit der Kugelrampenkupplung (17) gemeinsamen Kupplungring (15) abstützen, aufweist, und das Antriebselement (7) mit einer Abtriebsscheibe (18) in Eingriff steht, die Bestandteil der Kugelrampenkupplung (17) ist.

2. Scheibenbremse nach Anspruch 1, **dadurch gekennzeichnet, dass** das Antriebselement (7) als Zahnrad ausgebildet ist.

3. Scheibenbremse nach Anspruch 1 oder 2, **dadurch gekennzeichnet, dass** die Nachstelleinrichtung (3) eine Drehachse (9) sowie eine darauf geführte Antriebshülse (10) aufweist, an der ein mit dem Drehhebel (2) in Verbindung stehendes Antriebsrad (4) angeschlossen ist.

4. Scheibenbremse nach einem der vorhergehenden Ansprüche, **dadurch gekennzeichnet, dass** die Abtriebsscheibe (18) am Außenumfang Zähne (19) aufweist, die in Lücken (28) des Antriebselementes (7) eingreifen.

5. Scheibenbremse nach einem der vorhergehenden Ansprüche, **dadurch gekennzeichnet, dass** die Abtriebsscheibe (18) um einen Winkelbetrag gegenüber dem Antriebselement (7) frei drehbar ist.

6. Scheibenbremse nach einem der vorhergehenden Ansprüche, **dadurch gekennzeichnet, dass** der Kupplungsring (15) über eine Keilverzahnung mit der Drehachse (9) verbunden ist.

7. Scheibenbremse nach einem der vorhergehenden Ansprüche, **dadurch gekennzeichnet, dass** auf der der Kugelkonuskupplung (13) abgewandten Seite ein Drucklager (24) angeordnet ist, an dem sich einerseits die Abtriebsscheibe (18) und andererseits eine Vorspannfeder (20) abstützt, die an einen an der Drehachse (9) befestigten Federteller (21) anliegt.

8. Scheibenbremse nach einem der vorhergehenden Ansprüche, **dadurch gekennzeichnet, dass** die Drehachse (9) und die Antriebshülse (10) durch eine Ausnehmung (8) des Bremshebels (2) geführt sind.

9. Scheibenbremse nach einem der vorhergehenden Ansprüche, **dadurch gekennzeichnet, dass** die Baueinheit Kugelkonuskupplung (13)/ Kugelrampenkupplung (17)/Drucklager (24)/Vorspannfeder(20)/Antriebselement (7) außerhalb des Bremshebels (2) im Bremssattel positioniert sind.

10. Scheibenbremse nach einem der vorhergehenden Ansprüche, **dadurch gekennzeichnet, dass** die Nachstelleinrichtung (3) an ihrem der Vorspannfeder (20) gegenüberliegenden Endbereich mit einem Rückdrehelement (11) mit Überlastschutz versehen ist.

11. Scheibenbremse nach einem der vorhergehenden Ansprüche, **dadurch gekennzeichnet, dass** mit dem Kupplungsring (15) eine Drehfeder (16) in Eingriff ist.

12. Scheibenbremse nach einem der vorhergehenden Ansprüche, **dadurch gekennzeichnet, dass** an der Antriebshülse (10) ein Antriebsrad (4) befestigt ist, das mit einer Antriebseinheit des Bremshebels (2) in Eingriff steht zur Verdrehung der Antriebshülse (10) bei Verschwenkung des Bremshebels (2).

## Claims

1. Pneumatically or electromechanically actuated disc brake, in particular for a commercial vehicle, comprising
a) a brake calliper (1) overlapping a brake disc,
b) an application device located in the brake calliper (1) and provided with a brake lever (2) for pressing brake pads against the brake disc,
c) two adjusting screws (5) which are arranged parallel to and at a distance from one another and which are axially movable by means of the application device,
d) an adjusting device (3) which is positioned in the brake calliper and operated by the brake lever (2) and by means of which a wear-induced clearance between the brake pad and the brake disc can be substantially compensated for by way of an axial displacement of the adjusting screws (5),
e) an adjusting device (3) which comprises a central drive element (7) and is placed between the adjusting screws (5) and operatively connected thereto via a gear system, the central drive element (7) being operatively connected to gears (6) secured to an adjusting screw (5) each for synchronous adjustment,
**characterised in that** the drive element (7) comprises a powershift clutch consisting of a ball cone clutch (7) and a ball ramp clutch (17) forming an assembly therewith and loaded by an adjustable biasing spring (20), the ball cone clutch (7) comprising a conical bushing (14) guided on an axis of rotation (9) and having on its conical side spherical indentation-shaped recesses in which balls lie which on the other side are supported on a clutch ring (15) which is common with the ball ramp clutch (17), and the drive element (7) being in engagement with a drive disc (18) which is part of the ball ramp clutch (17).

2. Disc brake according to claim 1, **characterised in that** the drive element (7) is designed as a gear.

3. Disc brake according to claim 1 or 2 , **characterised in that** the adjusting device (3) comprises an axis of rotation (9) and a drive sleeve (10) guided thereon, to which a drive gear (4) connected to the rotary lever (2) is joined.

4. Disc brake according to any of the preceding claims, **characterised in that** the drive disc (18) has teeth (19) which engage with holes (28) of the drive element (7) on its outer circumference.

5. Disc brake according to any of the preceding claims, **characterised in that** the drive disc (18) is freely rotatable relative to the drive element (7) by an angular amount.

6. Disc brake according to any of the preceding claims, **characterised in that** the clutch ring (15) is joined to the axis of rotation (9) by way of wedge toothing.

7. Disc brake according to any of the preceding claims, **characterised in that** the side remote from the ball cone clutch (13) is provided with a thrust bearing (14) on which are supported on the one hand the drive disc (18) and on the other hand a biasing spring (20) which bears against a spring collar (21) secured to the axis of rotation (9).

8. Disc brake according to any of the preceding claims, **characterised in that** the axis of rotation (9) and the drive sleeve (10) are guided through a recess (8) of the brake lever (2).

9. Disc brake according to any of the preceding claims, **characterised in that** the assembly comprising the ball cone clutch (13), the ball ramp clutch (17), the thrust bearing (24), the biasing spring (2) and the drive element (7) is positioned outside the brake lever (2) in the brake calliper.

10. Disc brake according to any of the preceding claims, **characterised in that** the adjusting device (3) is provided with a restoring element (11) with overload protection in the end region opposite the biasing spring (20).

11. Disc brake according to any of the preceding claims, **characterised in that** a torsion spring (16) is in engagement with the clutch ring (15).

12. Disc brake according to any of the preceding claims, **characterised in that** a drive gear (4) which is in engagement with a drive unit of the brake lever (2) for rotating the drive sleeve (10) by pivoting the brake lever (2) is secured to the drive sleeve (10).

## Revendications

1. Frein à disque pouvant être actionné pneumatiquement ou électromécaniquement, notamment pour un véhicule utilitaire, comprenant
a) un étrier (1) de frein recouvrant un disque de frein,
b) un dispositif de serrage monté dans l'étrier (1) de frein, ayant un levier (2) de frein et destiné à presser des garnitures de frein sur le disque de frein,
c) deux broches (5) de réglage, qui sont disposées parallèlement et à distance l'une de l'autre et qui peuvent être déplacées axialement à l'aide du dispositif de serrage,
d) un dispositif (3) de réglage, qui est placé dans l'étrier de frein, qui peut être actionné par le levier (2) de frein et par lequel, par un réglage axial des broches (5) de réglage, une modification due à l'usure d'un jeu d'air entre la garniture de frein et le disque de frein peut être compensée sensiblement,
e) un dispositif (3) de réglage ayant un élément (7) central d'entraînement, qui est disposé entre les broches (5) de réglage et qui est en liaison d'action avec celles-ci par une transmission, l'élément (7) central d'entraînement étant en liaison d'action pour le réglage en synchronisme avec des roues (6) de transmission fixées respectivement sur une broche (5) de réglage,
**caractérisé en ce que** l'élément (7) d'entraînement a un embrayage de commande en charge constitué d'un embrayage (13) conique à billes et d'un embrayage (17) à rampe à billes formant ainsi une unité de construction et soumis à l'action d'un ressort au moyen d'un ressort (20) réglable de précontrainte, l'embrayage (13) conique à billes ayant une douille (14) conique guidée sur un axe (9) de rotation et à évidement en forme de calotte du côté de son cône, sur lesquels pénètrent des billes qui s'appuient, d'autre part, sur une bague (15) d'embrayage commune avec l'embrayage (17) à rampe à billes, et l'élément (7) d'entraînement est en prise avec un disque (18) de sortie, qui fait partie de l'embrayage (17) à rampe à billes.

2. Frein à disque suivant la revendication 1, **caractérisé en ce que** l'élément (7) d'entraînement est constitué en roue dentée.

3. Frein à disque suivant la revendication 1 ou 2, **caractérisé en ce que** le dispositif (3) de réglage a un axe (9) de rotation, ainsi qu'une douille (10) d'entraînement qui y est guidée et à laquelle est raccordée une roue (4) d'entraînement en liaison avec le levier (2) de rotation.

4. Frein à disque suivant l'une des revendications précédentes, **caractérisé en ce que** le disque (18) de sortie a, sur le pourtour extérieur, des dents (19), qui pénètrent dans des vides (28) de l'élément (7) d'entraînement.

5. Frein à disque suivant l'une des revendications précédentes, **caractérisé en ce que** le disque (18) de sortie peut tourner librement d'une valeur angulaire par rapport à l'élément (7) d'entraînement.

6. Frein à disque suivant l'une des revendications précédentes, **caractérisé en ce que** la bague (15) d'embrayage est reliée à l'axe (9) d'entraînement par une denture cunéiforme.

7. Frein à disque suivant l'une des revendications précédentes, **caractérisé en ce que**, du côté éloigné de l'embrayage (13) conique à billes, est monté un palier (24) de butée, sur lequel s'appuient, d'une part, le disque (18) de sortie et, d'autre part, un ressort (20) de précontrainte, qui s'applique à une coupelle (21) de ressort fixée à l'axe (9) de rotation.

8. Frein à disque suivant l'une des revendications précédentes, **caractérisé en ce que** l'axe (9) de rotation et la douille (10) d'entraînement sont guidés dans un évidement (8) du levier (2) de frein.

9. Frein à disque suivant l'une des revendications précédentes, **caractérisé en ce que** l'unité de construction embrayage (13) conique à billes/embrayage (17) à rampe à billes/ palier (24) de butée/ressort (20) de précontrainte/élément (7) d'entraînement est placée dans l'étrier de frein à l'extérieur du levier (2) de frein.

10. Frein à disque suivant l'une des revendications précédentes, **caractérisé en ce que** le dispositif (3) de réglage est pourvu, sur sa partie d'extrémité opposée au ressort (20) de précontrainte, d'un élément (11) de rappel de rotation ayant une protection vis-à-vis d'une surcharge.

11. Frein à disque suivant l'une des revendications précédentes, **caractérisé en ce qu'**un ressort (16) de torsion est en prise avec la bague (15) d'embrayage.

12. Frein à disque suivant l'une des revendications précédentes, **caractérisé en ce que**, sur la douille (10) d'entraînement, est fixée une roue (4) d'entraînement, qui est en prise avec un groupe d'entraînement du levier (2) de frein pour faire tourner la douille (10) d'entraînement lors du pivotement du levier (2) de frein.
